# EUROPÄISCHE PATENTSCHRIFT

(11) **EP 0 996 906 B1**
(45) Veröffentlichungstag und Bekanntmachung des Hinweises auf die Patenterteilung: **24.10.2001**
(21) Anmeldenummer: 98948824.2
(22) Anmeldetag: 22.07.1998
(51) Int. Cl.: G06F 17/30

(54) **VERFAHREN ZUR SYNCHRONISIERTEN DARSTELLUNG VON NETZ-INHALTEN**
PROCESS FOR THE SYNCHRONISED REPRESENTATION OF NETWORK CONTENTS
PROCEDE DE REPRESENTATION SYNCHRONISEE DE CONTENUS D'UN RESEAU

(30) Priorität: 25.07.1997 EP 97112878
(43) Veröffentlichungstag der Anmeldung: 03.05.2000
(73) Patentinhaber: SIEMENS AKTIENGESELLSCHAFT, 80333 München (DE)
(72) Erfinder: LAUTENBACHER, Markus, D-82487 Oberammergau (DE)
(86) Internationale Anmeldenummer: EP9804591
(87) Internationale Veröffentlichungsnummer: WO9905612

(56) Entgegenhaltungen:
- FURHT B: "MULTIMEDIA SYSTEMS: AN OVERVIEW" IEEE MULTIMEDIA, Bd. 1, Nr. 1, 21. März 1994, Seiten 47-59, XP000440888
- WONG J ET AL: "SYNCHRONIZATION IN SPECIFICATION-BASED MULTIMEDIA PRESENTATIONS" SOFTWARE PRACTICE & EXPERIENCE, Bd. 26, Nr. 1, 1. Januar 1996, Seiten 71-81, XP000567282
- ROTHERMEL K ET AL: "CLOCK HIERARCHIES: AN ABSTRACTION FOR GROUPING AND CONTROLLING MEDIA STREAMS" IEEE JOURNAL ON SELECTED AREAS IN COMMUNICATIONS, Bd. 14, Nr. 1, 1. Januar 1996, Seiten 174-184, XP000548820
- OHMORI T ET AL: "DISTRIBUTED COOPERATIVE CONTROL FOR SHARING APPLICATIONS BASED ON MULTIPARTY AND MULTIMEDIA DESKTOP CONFERENCING SYSTEM: MERMAID" PROCEEDINGS OF THE INTERNATIONAL CONFERENCE ON DISTRIBUTED COMPUTIN SYSTEMS, YOKOHAMA, JUNE 9 - 12, 1992, Nr. CONF. 12, 9. Juni 1992, Seiten 538-546, XP000341050 INSTITUTE OF ELECTRICAL AND ELECTRONICS ENGINEERS

## Beschreibung

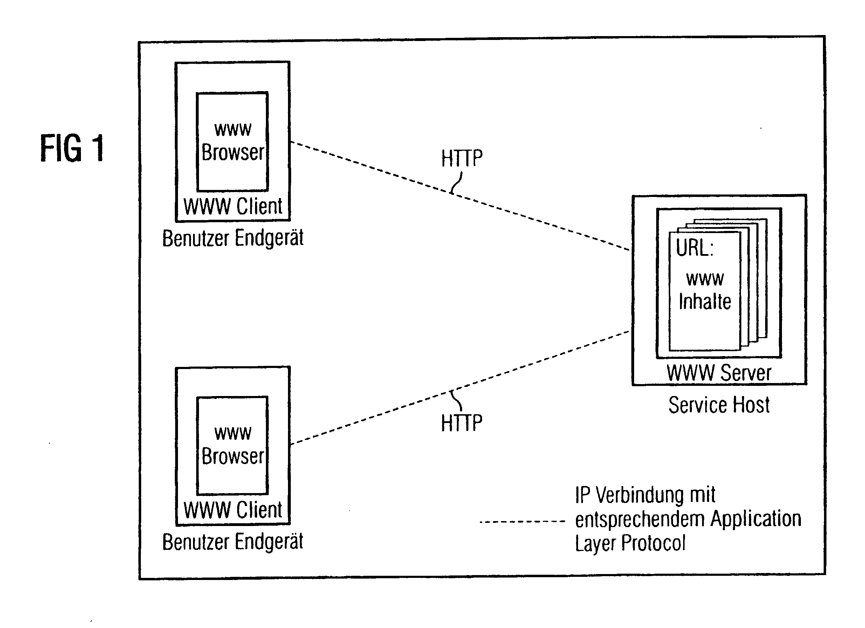

Das World Wide Web (WWW) ist ein bekannter Dienst in Internet Protocol (IP) basierten Netzen zur Darstellung von multimedialen, vernetzten Inhalten (siehe FIG 1 der Zeichnung).

Das WWW ermöglicht einem Benutzer, multimediale Inhalte und unterschiedlichste, in einem IP-Netzwerk angebotene Dienste mittels eines universellen, einfach zu bedienenden Graphical User Interfaces (GUI) zu nutzen.

Realisiert wird der WWW Dienst durch eine in IP-Netzwerken allgemein übliche Client-Server Architektur. Der WWW Browser realisiert dabei auf dem Benutzer Endgerät den WWW Client und bildet das GUI zum Benutzer des WWW Dienstes. Die Kommunikation zwischen WWW Client und Server erfolgt unter Verwendung des Hypertext Transfer Protocol (HTTP). Multimediale WWW Inhalte werden durch den WWW Server auf dem Service Host bereitgestellt. Der sog. Universal Resource Locator (URL) dient als Adresse zur Auffindung von WWW Inhalten in IP-Netzwerken. WWW Client bzw. Server sind i.a. als Software Applikationen auf dem Benutzer Endgerät (z.B. Personal Computer) bzw. Service Host (z.B. Workstation) realisiert.

### Im einzelnen erfolgt ein Aufruf des WWW Dienstes wie folgt:

Nach entsprechender Aktion des Benutzers baut der WWW Client eine Verbindung zu einem sog. "well known TCP/IP port" am Service Host auf. Der auf dem Service Host aktive WWW Server überwacht diesen, dem WWW Dienst zugeordneten Port, registriert entsprechende Anfragen, lokalisiert den abgerufenen WWW Inhalt und überträgt diesen zu dem Client, von dem die Anfrage ausging. Anschließend wird die TCP/IP Verbindung zwischen WWW Server und dem entsprechenden Client wieder abgebaut.
Von verschiedenen WWW Clients bei dem selben Server eingehende Anfragen werden, wie vorstehend erläutert, unabhängig voneinander behandelt. Das Dokument : FUHRT B :" MULTIMEDIA SYSTEMS : AN OVERVIEW", IEEE MULTIMEDIA, Bd. I, Nr. I, 21 März 1994, Seiten 47-59 is bekannt. Dieses Dokument beschreibt Multimediasysteme, in denen Datenflüsse möglicherweise synchronisiert werden müssen.

### Probleme

Aus den genannten Gründen ist der Stand der Technik beschränkt auf einen Informationsfluß vom WWW Server zum Client und zwar nur nach entsprechender expliziter Anfrage durch den Client. Weiterhin ist eine automatische Korrelation zwischen den Informationsflüssen zu verschiedenen WWW Clients, insbesondere eine Synchronisation der übertragenen WWW Inhalte, nicht möglich.
Eine inhaltliche Synchronisation zwischen WWW Clients mehrerer Benutzer ist nur durch expliziten Austausch des den **WWW** Inhalten als Adresse zugeordneten URL über einen separaten Kommunikationskanal zwischen den Benutzern (z.B.
Telephon, e-mail, etc.) möglich. Der entsprechende URL ist dabei jeweils von Hand durch die einzelnen Benutzer in ihren WWW Client einzutragen.

Die genannten Probleme bzw. Nachteile treten nicht nur bei dem bsph. WWW-Dienst auf, sondern bei jedem Dienst, der eine allgemeine Verteilung von Inhalten bietet, der nach dem Client-Server Prinzip funktioniert, und der nur "n" unsynchronisierte 1:1 Client-Server Beziehung vorsieht.

Der Erfindung liegt die Aufgabe zugrunde, die genannten Nachteile zu überwinden.

Diese Aufgabe wird durch ein Verfahren nach Anspruch 1 gelöst.

Die durch das erfindungsgemäße Verfahren von dem Synchronization Server kontrollierbare, automatisch zwischen verschiedenen Clients synchronisierte Übertragung von Netz-Inhalten ist sehr nützlich und wirtschaftlich interessant, da sich damit eine Reihe neuer Anwendungen realisieren lassen. Beispiele: Electronic Commerce, Electronic Consulting, Call Centers, Telelearning, Multimedia Hotline.

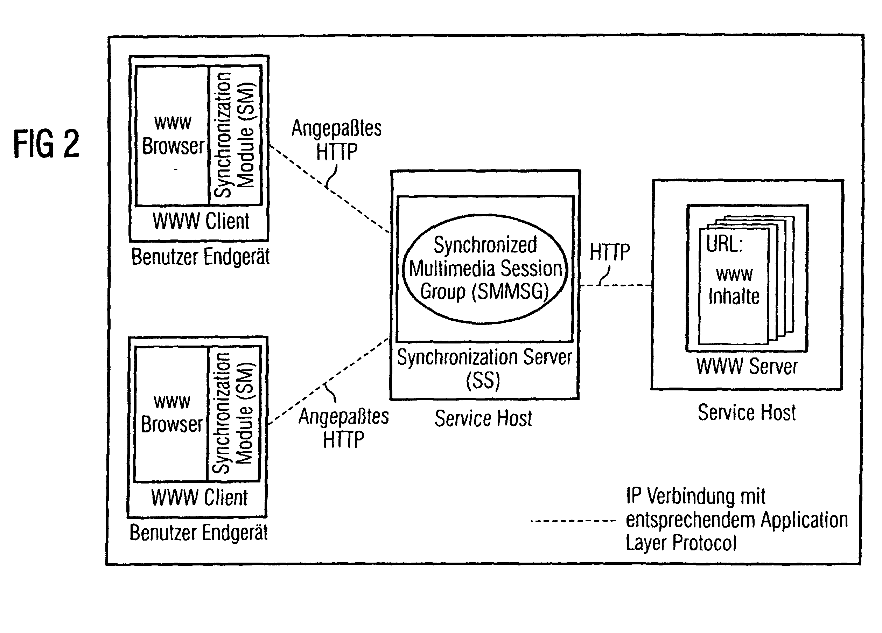

Im folgenden wird ein WWW-Ausführungsbeispiel der Erfindung anhand FIG 2 der Zeichnung näher erläutert.

### Erweiterte WWW-Systemarchitektur

FIG 2 illustriert eine erweiterte Systemarchitektur für den WWW Dienst zur zwischen mehreren Benutzern synchronisierten Darstellung von WWW Inhalten.
(Der Lesbarkeit halber beschränkt sich die Abbildung auf zwei Benutzer, dargestellt durch je einen WWW Client. Das beschriebene Verfahren erlaubt allerdings eine beliebige Anzahl von Benutzern). Die Erfindung ist selbstverständlich nicht auf das Beispiel des WWW-Dienstes, dem HTTP zugrunde liegt, beschränkt, sondern kann bei jedem Dienst angewendet werden, der eine allgemeine Verteilung von Inhalten bietet, der nach' dem Client-Server Prinzip funktioniert, und der ursprünglich nur "n" unsynchronisierte 1:1 Client-Server Beziehungen vorsah und nicht eine synchronisierte n:1 Client-Server Beziehung.

Die wesentlichen Erweiterungen im Vergleich zur bekannten WWW-Systemarchitektur betreffen folgende Komponenten:
1.Die WWW Browser der zu synchronisierenden WWW Clients werden in ihrer Funktionalität durch ein Synchronization Module SM erweitert. Diese Erweiterung kann gemäß bekannter Softwaretechniken statisch mittels sog. WWW Browser Plug-Ins erfolgen, oder dynamisch bei der Dienstanforderung durch transparentes Downloading von sog. Java Applets bzw. ActiveX Controls über das IP-Netzwerk.
2.Dem bekannten WWW Server gemäß FIG 1 wird ein Synchronization Server SS vorgeschaltet. Der Synchronization Server SS bildet das Bindeglied zwischen den um das Synchronization Module SM erweiterten WWW Clients und dem konventionellen WWW Server zur Bereitstellung von WWW Inhalten. Die Verbindung zwischen Synchronization Server SS und WWW Server erfolgt mittels HTTP über IP, zwischen Synchronization Server SS und erweiterten www Clients mittels eines entsprechend angepaßten HTTP über IP (Die notwendige Erweiterung des Protokolls zwischen Synchronization Server SS und Client ist bei der Realisierung der Erfindung bei einem Nicht-WWW-Dienst, der ebenfalls die Verteilung von Inhalten bietet, entsprechend durchzuführen).
3.Synchronization Server SS und WWW Server bilden zwei unabhängige Software Applikationen, die parallel auf dem selben physikalischen Service Host oder, wie in FIG 2 dargestellt, auf zwei im IP-Netzwerk verteilten Service Hosts ablaufen können.

### Eigenschaften

- Ein WWW Client fordert erstmalig den Dienst einer synchronisierte Darstellung von WWW Inhalten durch Aufruf eines speziellen URL an, der auf den Synchronization Server SS verweist. Der Aufruf dieses URL verbindet den WWW Client mit dem Synchronization Server SS auf dem entsprechenden Service Host. Diese erstmalige Verbindung zwischen WWW Client und Synchronization Server SS erfordert noch keine Erweiterung durch ein und erfolgt daher über Standard HTTP.
- Der Synchronization Server SS prüft, ob im WWW Client bereits statisch ein Synchronization Module SM installiert ist und führt ggf. eine dynamische Installation des Synchronization Module SM durch (vgl. Punkt 1 in Abschnitt "Erweiterte WWW-Systemarchitektur" ).
- Der Synchronization Server SS faßt alle zu synchronisierenden WWW Clients logisch zu einer "Synchronous Multimedia Session Group" SMMSG zusammen.
- Die Zuordnung zu einer SMMSG erfolgt bei statischer bzw. dynamischer Installation des Synchronization Module SM (vgl. Punkt 1 in Abschnitt "Erweiterte WWW-Systemarchitektur") durch explizite bzw. implizite Registrierung der zu synchronisierenden WWW Clients durch den Synchronization Server SS bei der Dienstanforderung der synchronisierten Darstellung.
- Die Synchronization innerhalb einer SMMSG läuft wie folgt ab:
   1.Das Synchronization Module SM in den WWW Clients arbeitet als URL Umlenkung. D.h. eine Standard Anfrage gemäß HTTP eines zur einer bestimmten SMMSG gehörigen Clients nach einer URL in einem beliebigen WWW Server wird vom Synchronization Module SM abgefangen und statt dessen an den Synchronization Server SS weitergeleitet.
   2.Synchronization Module SM und Synchronization Server SS kommunizieren gemäß einem geeignet angepaßten HTTP. Insbesondere empfängt der Synchronization Server SS vom Synchronization Module SM die vom WWW Client angeforderte URL.
   3.Der Synchronization Server SS lädt die angeforderte URL vom entsprechenden WWW Server (der WWW Server kann bei entsprechender URL auch auf demselben Service Host liegen wie der Synchronization Server SS) stellvertretend für den anfordernden WWW Client.
   4.Der Synchronization Server SS informiert alle zu einer bestimmten SMMSG gehörigen Synchronization Module SM darüber, daß ein neuer WWW Inhalt für die SMMSG vorliegt (Standard HTTP stellt bereits Mechanismen zur Übertragung von Inhalten vom Server zum Client zur Verfügung, wenn der Client diesen Inhalt per request abruft. Wenn der Synchronization Server SS dem Synchronization Module SM also nur mitteilt, daß es "etwas abzuholen gibt" und "wo", und der Synchronization Module SM anschließend den Client entsprechend zum Abruf animiert, dann kann die eigentliche Übertragung des Inhalts mit Standard WWW Mitteln realisiert werden).
   5.Die Synchronization Module SM der zu einer bestimmten SMMSG gehörigen WWW Clients veranlassen ihre zugehörigen WWW Clients zum Anfordern des neuen Inhalts (wegen der genannten Umlenkung vom Synchronization Server SS), zum Download des Inhalts und zu dessen Anzeige.
   6.Damit ist der in den zu einer SMMSG gehörigen WWW Clients angezeigte Inhalt synchronisiert.
- Der Synchronization Server SS behandelt von den verschiedenen zu einer SMMSG gehörigen WWW Clients über die SMs eingehende URL Anfragen chronologisch nach deren Eingang, d.h. entsprechend einer Warteschlange nach dem "first-come-first-served" Prinzip. Für jede behandelte Anfrage wiederholen sich o.g. Punkte 1-6.
- Mit der Terminierung des SM im WWW Client durch den Benutzer verläßt dieser die entsprechende SMMSG. Die Terminierung des SM erfolgt z.B. über ein entsprechendes Icon in der Steuerleiste des WWW Browsers, das bei der Installation des SM erzeugt wird.
- Zur Resubscription bzw. zur Wiederaufnahme nach Unterbrechung einer SMMSG wird allen WWW Clients einer bestimmten SMMSG ein identischer "Session Group Login Identifier" vom Synchronization Server SS zugeteilt. Dieser Identifier kann beispielsweise als URL im sog. Bookmark-File des WWW Browsers hinterlegt werden. Der Benutzer tritt dann der entsprechenden SMMSG durch Aufruf des entsprechenden Bookmarks (Mouseclick oder Benutzereingabe) erneut bei.
   Bei dynamischer Erweiterung des WWW Browsers (vgl. Punkt 1 in Abschnitt "Erweiterte WWW-Systemarchitektur") wird bei der Wiederanmeldung an die entsprechende SMMSG auch das zur Kommunikation mit dem Synchronization Server SS notwendige Synchronization Module SM per Download erneut installiert.
- Eine SMMSG gilt als beendet und wird logisch vom Synchronization Server SS terminiert, wenn der letzte zu dieser bestimmten SMMSG gehörige WWW Client sich von dieser abmeldet.

### Vorteile

1.Jeder aus der Gruppe von synchronisierten WWW Clients kann die Rolle eines "Führers durch WWW Inhalte" für die übrigen Clients der entsprechenden SMMSG übernehmen. Der vom momentanen "Führer" angeforderte WWW Inhalt wird gleichzeitig auch an die übrigen Mitglieder der SMMSG übertragen und so eine Synchronization der WWW Inhalte innerhalb einer SMMSG erreicht.
2.Die Synchronization zwischen den WWW Clients erfolgt automatisch ohne expliziten Austausch von URLs und deren Eintragung von Hand durch den Benutzer in den WWW Client.
3.Die vorstehenden Punkte 1 und 2 ermöglichen neue Anwendungen im Bereich multimedialer Kundenberatung/Verkaufsgespräche und Telelearning in IP-Netzwerken wie z.B. dem Inter/Intranet. Der Berater/Verkäufer bzw. Lehrer kann den Kunden/Schüler ohne dessen weiteres Zutun automatisch durch die auf dem WWW Server bereitgestellten multimedialen Inhalte führen. Bei Bedarf kann umgekehrt auch der Kunde/Schüler den Berater/Lehrer zu einem bestimmten WWW Inhalt führen.
4.Die bereits im Inter/Intranet installierte Infrastruktur aus WWW Clients und Servern inklusive der zugehörigen Protokolle sowie Benutzer Endgeräten und Service Hosts wird wiederverwendet. Die notwendigen Erweiterungen sind in unabhängigen WWW Browser Softwaremodulen bzw. eigenständigen Server Applikationen realisierbar. Dies ermöglicht eine kostengünstige und schnelle Umsetzung auf der Basis existierender Installationen und Standards.

### Abkürzungen

- GUI: Graphical User Interface
- HTTP: Hypertext Transfer Protocol
- IP: Internet Protocol
- SM: Synchronization Module
- SMMSG: Synchronous Multimedia Session Group
- SS: Synchronization Server
- URL: Universal Resource Locator
- WWW: World Wide Web

## Patentansprüche

1. Verfahren zur synchronisierten Darstellung von Netz-Inhalten, demgemäß
a) aufgrund einer Anfrage eines Clients nach dem Dienst einer gruppenweise synchronisierten Darstellung von Datennetz-Inhalten von einem Synchronization Server (SS) bestimmte, in der Anfrage spezifizierte Clients zu einer Gruppe, einer sogenannten Synchronous Multimedia Session Group (SMMSG), zusammengefaßt werden,
b)eine Anfrage eines zur der genannten SMMSG gehörigen Clients nach einem bestimmten Netz-Inhalt an den Synchronization Server (SS) umgeleitet wird,
c)der angeforderte Inhalt aus dem entsprechenden Netz-Server in den Synchronization Server (SS) geladen und vom Synchronization Server (SS) an den anfordernden Client weitergeleitet wird,
d)alle zu der genannten SMMSG gehörigen Clients von dem Synchronization Server (SS) veranlaßt werden, den genannten angeforderten Inhalt ebenfalls anzufordern.

2. Verfahren nach Anspruch 1,
**dadurch gekennzeichnet, daß**
es sich bei den genannten Netz-Inhalten um WWW-Inhalte und bei den genannten Anfragen um WWW-Anfragen handelt.
3. Verfahren nach einem der Ansprüche 1 bis 2,
**dadurch gekennzeichnet, daß**
bei der Anfrage eines Clients nach dem Dienst SMMSG eine Verbindung zum Synchronization Server (SS) aufgebaut wird, worauf vom Synchronization Server (SS) geprüft wird, ob im Client bereits statisch ein Synchronization Module (SM) installiert ist, und falls nicht eine dynamische Installation des Synchronization Module (SM) im Client durchgeführt wird.
4. Verfahren nach einem der Ansprüche 1 bis 3,
**dadurch gekennzeichnet, daß**
einer SMMSG vom Synchronization Server (SS) ein Session-Group-Login-Identifier zugeteilt wird, der im Client eines Users hinterlegt wird und bei einer Unterbrechung der SMMSG dazu dient, daß die User die SMMSG auf einfache Weise erneut aufnehmen können.
5. Synchronization Server in einem Service Host Rechner, der bestimmte, in einer Anfrage eines Clients spezifizierte Clients zu einer Gruppe, einer sogenannten Synchronous Multimedia Session Group (SMMSG), zusammenfaßt, stellvertretend für die SMMSG Datennetz-Inhalte vom Netz-Server lädt, die genannten Inhalte für die Clients dieser SMMSG zum Download bereitstellt und die Clients veranlaßt, die genannten Inhalte anzufordern.
6. Client eines Client-Rechners,
**gekennzeichnet durch**
ein Synchronization Module (SM), das es dem Client ermöglicht an einem Dienst der synchronisierten Darstellung von Datennetz-Inhalten teilzunehmen, indem
a)es eine Standard Anfrage des Clients nach einem bestimmten Datennetz-Inhalt an den Synchronization Server (SS) weiterleitet,
b)es eine Standard Anfrage des Client nach einem neuen Inhalt zur synchronisierten Darstellung veranlaßt, sobald es von dem Synchronization Server (SS) darüber informiert wurde, daß ein neuer Inhalt zur synchronisierten Darstellung vorliegt.

## Claims

1. Method for the synchronized display of network contents, according to which
a) on the basis of a request from a client for the service of synchronized display of data network contents in groups by a synchronization server (SS), particular clients specified in the request are combined to form a group, a so-called Synchronous Multimedia Session Group (SMMSG),
b) a request from a client associated with the aforementioned SMMSG for a particular network content is diverted to the synchronization server (SS),
c) the requested content is loaded into the synchronization server (SS) from the appropriate network server and is forwarded to the requesting client by the synchronization server (SS),
d) the synchronization server (SS) prompts all the clients associated with the aforementioned SMMSG likewise to request the aforementioned requested content.

2. Method according to Claim 1,
**characterized in that**
the aforementioned network contents are WWW contents, and the aforementioned requests are WWW requests.

3. Method according to one of Claims 1 to 2,
**characterized in that**,
when a client requests the service SMMSG, a connection is set up to the synchronization server (SS), whereupon the synchronization server (SS) checks whether a synchronization module (SM) is already statically installed in the client and, if not, the synchronization module (SM) is dynamically installed in the client.

4. Method according to one of Claims 1 to 3,
**characterized in that**
the synchronization server (SS) allocates to an SMMSG a session group login identifier which is stored in a user's client and, in the event of the SMMSG being interrupted, allows the users to pick up the SMMSG again in a simple manner.

5. Synchronization server in a service host computer which combines particular clients, specified in a request by a client, to form a group, a so-called Synchronous Multimedia Session Group (SMMSG), loads data network contents from the network server so as to represent the SMMSG, provides the aforementioned contents for download for the clients of this SMMSG and prompts the clients to request the aforementioned contents.

6. Client on a client computer,
**characterized by**
a synchronization module (SM) which allows the client to participate in a service for the synchronized display of data network contents by
a) forwarding a standard request by the client for a particular data network content to the synchronization server (SS),
b) prompting a standard request by the client for a new content for synchronized display as soon as the synchronization server (SS) has informed it that a new content is available for synchronized display.

## Revendications

1. Procédé pour la représentation synchronisée de contenus de réseaux, dans lequel
a) sur la base d'une demande d'un client pour un service d'une représentation synchronisée, groupe par groupe, de contenus de réseaux de données, un serveur de synchronisation (SS) rassemble certains clients spécifiés dans la demande en un groupe dit Synchronous Multimedia Session Group (SMMSG),
b) une demande d'un client appartenant au SMMSG mentionné pour un certain contenu de réseau est déviée vers le serveur de synchronisation (SS),
c) le contenu demandé est chargé du serveur de réseau. correspondant dans le serveur de synchronisation (SS) et est retransmis du serveur de synchronisation (SS) au client demandeur,
d) tous les clients appartenant au SMMSG mentionné sont invités par le serveur de synchronisation (SS) à demander également le contenu demandé mentionné.

2. Procédé selon la revendication 1,
**caractérisé par le fait que** les contenus de réseaux mentionnés sont des contenus WWW et les demandes mentionnées sont des demandes WWW.

3. Procédé selon l'une des revendications 1 à 2,
**caractérisé par le fait que**, lors de la demande d'un client pour un service SMMSG, on établit une liaison vers le serveur de synchronisation (SS), à la suite de quoi le. serveur de synchronisation (SS) contrôle si un module de synchronisation (SM) est déjà installé, statiquement dans le client et, si ce n'est pas le cas, on effectue une installation dynamique du module de synchronisation (SM) chez le client.

4. Procédé selon l'une des revendications 1 à 3,
**caractérisé par le fait que** le serveur de synchronisation (SS) attribue à un SMMSG un Session-Group-Login-Identifier qui est mémorisé dans le client d'un User et qui sert lors d'une interruption du SMMSG à ce que les Users puissent reprendre facilement le SMMSG.

5. Serveur de synchronisation dans un ordinateur Service Host qui rassemble certains clients spécifiés dans une demande d'un client en un groupe dit Synchronous Multimedia Session Group (SMMSG), qui charge de manière représentative pour le SMMSG des contenus de réseaux de données provenant du serveur de réseau, qui prépare lesdits contenus pour les clients de ce SMMSG en vue d'un chargement Download et qui invitent . les clients à demander lesdits contenus.

6. Client d'un ordinateur client,
**caractérisé par** un module de synchronisation (SM) qui permet au client de participer à un service de la représentation synchronisée de contenus de réseaux de données,
a) en retransmettant une demande standard du client pour un certain contenu de réseaux de données au serveur de synchronisation (SS),
b) en provoquant une demande standard du client pour un nouveau contenu en vue de la représentation synchronisée dès qu'il a été informé par le serveur de synchronisation (SS) qu'il y a un nouveau contenu disponible en vue de la représentation synchronisée.
